# EUROPÄISCHE PATENTSCHRIFT

(11) **EP 2 272 409 B1**
(45) Veröffentlichungstag und Bekanntmachung des Hinweises auf die Patenterteilung: **08.02.2012**
(21) Anmeldenummer: 10405130.5
(22) Anmeldetag: 06.07.2010
(51) Int. Cl.: A47J 31/44, A47J 31/60

(54) **Getränkebereitungsmaschine und Verfahren zum Reinigen einer Getränkebereitungsmaschine**
Drink preparation machine and method for cleaning same
Machine de préparation de boissons et procédé de nettoyage d'une machine de préparation de boissons

(30) Priorität: 08.07.2009 EP 09405110
(43) Veröffentlichungstag der Anmeldung: 12.01.2011
(73) Patentinhaber: Jura Elektroapparate AG, 4626 Niederbuchsiten (CH)
(72) Erfinder: Reyhanloo, Shahryar, 4573 Lohn Ammannsegg (CH)
(74) Vertreter: EGLI-EUROPEAN PATENT ATTORNEYS

(56) Entgegenhaltungen:
- EP-A- 1 911 382
- WO-A-97/27793
- WO-A-2008/006623
- DE-A1- 19 955 195

## Beschreibung

Die Erfindung bezieht sich auf eine Getränkebereitungsmaschine und ein Verfahren zum Reinigen einer Getränkebereitungsmaschine.

In bekannten Getränkebereitungsmaschinen sind Vorrichtungen zum Aufschäumen und/oder Erwärmen von Milch enthalten. Hierbei wird Milch beispielsweise in eine in der jeweiligen Vorrichtung zum Aufschäumen und/oder Erwärmen von Milch ausgebildeten Unterdruckkammer, in der durch Einleiten von (Wasser-) Dampf (z.B. in Form eines Dampfstrahls) nach dem Venturi-Prinzip ein Unterdruck realisiert wird, durch einen Milchansaugschlauch aus einem zumeist separaten Milchbehälter gesaugt und in dieser durch den Dampf erhitzt und eventuell mit beigefügter Luft aufgeschäumt, um erwärmte Milch oder Milchschaum bzw. ein Gemisch von erwärmter Milch und Milchschaum herzustellen. Es sind auch Getränkebereitungsmaschinen mit einer integrierten Vorrichtung zum Aufschäumen und/oder Erwärmen von Milch bekannt, welche es ermöglicht, wahlweise Kaffee (ohne Zusatz von Milch) oder erwärmte Milch (ohne Zusatz von Kaffee) oder Milchkaffee (ohne Zusatz von Milchschaum) oder Kaffeespezialitäten, die Milchschaum oder geschäumte Milch enthalten (beispielsweise Cappuccino oder Latte Macchiato), herzustellen.

Ein Problem bei allen Vorrichtungen, die Milch handhaben, liegt darin, dass Milchreste über eine längere Zeitdauer im System verbleiben. Milch verdirbt schnell, insbesondere begünstigt durch eine ausbleibende Kühlung. Damit die Milch, welche sich nach einem Milchbezug im System befindet, nicht verdirbt bzw. verkeimt, sollten die mit Milch in Berührung kommenden Teile in möglichst kurzen Zeitintervallen gründlich gereinigt bzw. gespült werden.

Hierzu kann die Vorrichtung zum Aufschäumen und/oder Erwärmen von Milch gereinigt werden, indem beispielsweise Dampf durch diese, ohne Milcheinleitung, hindurchgeleitet wird.

Eine separate Reinigung des Milchansaugschlauches, in welchem sich ebenfalls Milchrückstände befinden, kann durchgeführt werden, indem dieser abgenommen wird und von Hand unter fliessend Wasser gespült wird.

Es ist ein weiteres Verfahren zur Reinigung des Milchansaugschlauches bekannt, bei welcher ein Ende des Milchansaugschlauches, durch welchen ansonsten die Milch im Milchbehälter angesaugt wird, aus diesem herausgenommen wird, zwischenzeitlich in einen Behälter mit Reinigungsflüssigkeit eingetaucht wird, und darauf folgend an der Getränkebereitungsmaschine ein Milchbezug vorgenommen wird, wobei dann die Reinigungsflüssigkeit (anstatt Milch) durch den Milchansaugschlauch angesaugt wird und dieser dadurch gereinigt bzw. gespült wird. Diese Schritte sind jedoch umständlich und zudem wird der Benutzer gezwungen, jenen Aussenumfang des Milchansaugschlauches zu berühren, welcher zuvor in der Milch eingetaucht war, wodurch sich der Benutzer die Hände beschmutzt. Auch kann es an jenem Aussenumfang des Milchansaugschlauches zu Kontaminationen durch den Benutzer kommen. Der Milchansaugschlauch könnte dann mit Keimen, in Verbindung mit der Milch als Wachstumsträger, kontaminiert werden. Nach dem Spülen des Milchansaugschlauchs mit der Reinigungsflüssigkeit ist es zweckmässig, den Milchansaugschlauch mit einer geeigneten Flüssigkeit, beispielsweise Wasser, zu spülen, um sicherzustellen, dass gegebenenfalls im Milchansaugschlauch vorhandene Reste der Reinigungsflüssigkeit beseitigt werden und der Milchansaugschlauch somit mit Sicherheit von Resten der Reinigungsflüssigkeit befreit ist. Nach diesem Vorgang können noch Wasserreste in dem Schlauch sein. Diese Wasserreste werden bei einem nächsten Milchbezug mit in die Vorrichtung zum Aufschäumen und/oder Erwärmen von Milch angesaugt und könnten zu einer geschmacklichen Beeinträchtigung führen, insbesondere, wenn das Wasser nach einer längeren Nichtbenutzung der Getränkebereitungsmaschine abgestanden ist.

Bis heute wird der Milchansaugschlauch entweder gar nicht, von Hand, wie oben beschrieben gespült oder er muss an einen separaten Wasserausgang der Getränkebereitungsmaschine angeschlossen werden.

Die EP 1 797 801 und die WO 2008/006623 A2 offenbaren jeweils eine Vorrichtung zum Zuführen von Milch, bei welcher ein Milchansaugschlauch mit einem Ende an einer Vorrichtung zum Aufschäumen und/oder Erwärmen von Milch angeschlossen ist und mit seinem anderen Ende in einem Milchvorrat in einem Milchbehälter eingetaucht ist. Um den Milchansaugschlauch zu reinigen, wird hierbei vorgeschlagen, dieses Ende des Milchansaugschlauches, welches sich in dem Milchvorrat in dem Milchbehälter befindet, aus diesem herauszunehmen und an eine Reinigungsvorrichtung anzuschliessen, welche einen Heisswasser-Dampf-Bereiter umfasst. Die Vorrichtung zum Aufschäumen und/oder Erwärmen von Milch ist mittels einer Leitung mit dem Heisswasser-Dampf-Bereiter verbunden und derart ausgebildet, dass ein Unterdruck in der Vorrichtung zum Aufschäumen und/oder Erwärmen von Milch erzeugt wird und infolgedessen Milch aus dem Milchbehälter in die Vorrichtung zum Aufschäumen und/oder Erwärmen von Milch angesaugt wird, wenn Dampf aus dem Heisswasser-Dampf-Bereiter über die Leitung in die Vorrichtung zum Aufschäumen und/oder Erwärmen von Milch eingeleitet wird. Der Eleisswasser-Dampf-Bereiter umfasst weiterhin einen Heisswasserauslass und einen Dampfauslass, wobei aus dem Heisswasserauslass Heisswasser und aus dem Dampfauslass Dampf ausgegeben werden kann. Zu Reinigungszwecken kann anschliessend das von der Vorrichtung zum Aufschäumen und/oder Erwärmen von Milch entfernte Ende des Milchansaugschlauchs entweder an den Heisswasserauslass oder alternativ an den Dampfauslass angeschlossen werden. Anschliessend wird, wenn der Milchansaugschlauch an den Heisswasserauslass angeschlossen ist, Heisswasser aus dem Heisswasserauslass bezogen, durch den Milchansaugschlauch und die Vorrichtung zum Aufschäumen und/oder Erwärmen von Milch geleitet, wodurch diese Vorrichtung und der Milchansaugschlauch gespült werden, und schliesslich durch einen Milchauslauf abgeführt. Alternativ wird, wenn der Milchansaugschlauch an den Dampfauslass angeschlossen ist, Dampf aus dem Dampfauslass bezogen, durch den Milchansaugschlauch und die Vorrichtung zum Aufschäumen und/oder Erwärmen von Milch geleitet, wodurch diese Vorrichtung und der Milchansaugschlauch gespült werden, und schliesslich durch den Milchauslauf abgeführt.

In diesem Zusammenhang ist nachteilig, dass der Benutzer hierzu Aussenbereiche des Milchansaugschlauches berühren muss, welche mit Milch benetzt sind, wodurch sich der Benutzer die Hände beschmutzt. Ausserdem können jene Bereiche eventuell durch den Benutzer mit Keimen, in Verbindung mit der Milch als Wachstumsträger, kontaminiert werden, wodurch das Vermehren schädlicher Keime unterstützt werden kann. Da dieser Bereich des Milchansaugschlauches später wieder in die Milch des Milchbehälters eingetaucht wird, kann es dann zu einer Übertragung der Keime in die Milch kommen, welches zu einer gesundheitlichen Gefährdung führen kann. Nachteilig ist ebenfalls, dass lediglich Heisswasser und/oder Dampf durch den Milchansaugschlauch geleitet wird, was je nach Verschmutzungsgrad zu einer unzureichenden Reinigung führen kann. Zudem befinden sich nach diesem Vorgang noch Wasserreste in dem System.

Die EP 2 020 197 offenbart eine Getränkebereitungsmaschine mit einer Reinigungsvorrichtung zum Reinigen von internen Leitungen, welche Milch führen. Hierbei müssen zum Spülen verschiedene Ventile gesteuert bzw. betätigt werden. Ein Ventil 14 kann so geschaltet werden, dass eine Reinigungsflüssigkeit aus einer Quelle 13 in den Milchpfad fliessen kann. Verschiedene Ventile werden so geschaltet, dass jeweils ein geschlossener Kreislauf entsteht, durch den die Reinigungsflüssigkeit mittels einer Pumpe 11 gepumpt werden kann. Es können verschiedene Kreisläufe bzw. Pfade für die Reinigungsflüssigkeit geschaltet werden, um verschiedene Bereiche des Milchpfades zu erfassen.

Eine automatische Reinigung des Milchauslasses 2 ist nicht vorgesehen. Dieser muss separat gereinigt werden. Um einen Teil des Milchpfades in der Nähe des Milchauslasses zu reinigen, sind besondere Massnahmen nötig. Hierzu muss der Milchauslass entnommen werden und durch eine Kartusche 22 ersetzt werden, wodurch ein geschlossener Kreislauf geschaffen wird, welcher den genannten Teil des Milchpfades in der Nähe des Milchauslasses einschliesst. Am Ende der Reinigungsprozedur kann die Reinigungsflüssigkeit - gesteuert über Ventile 18 und 31 - über einen separaten Auslass 19 abgelassen werden.

In diesem Zusammenhang ist nachteilig, dass zum Reinigen des Milchpfades eine hohe Anzahl von zusätzlichen Einrichtungen nötig ist, welches zu hohen Kosten führt und eine aufwendigere Wartung zur Folge hat. Eine automatische Reinigung des Milchauslasses ist nicht möglich bzw. erfordert die Demontage des Milchauslasses und ein separates Reinigen. Zudem muss eine aufwendige und teure Kartusche nach der Demontage des Milchauslasses an dieser Position angekoppelt werden, welches sehr aufwendig ist und insbesondere zeitaufwendig ist.

Der vorliegenden Erfindung liegt die Aufgabe zugrunde, die genannten Nachteile zu vermeiden, und eine Getränkebereitungsmaschine und ein Verfahren zum Reinigen einer Getränkebereitungsmaschine zu schaffen, wobei alle Elemente, welche mit Milch in Kontakt treten, insbesondere ein Milchansaugschlauch und eine Vorrichtung zum Aufschäumen und/oder Erwärmen von Milch, schnell und einfach mit wenigen Handgriffen automatisch gereinigt bzw. gespült werden.

Diese Aufgabe wird gelöst durch eine Getränkebereitungsmaschine mit den Merkmalen des Patentanspruchs 1.

Diese Getränkebereitungsmaschine umfasst eine Vorrichtung zum Aufschäumen und/oder Erwärmen von Milch, welche Vorrichtung über einen Milchansaugschlauch an einen Milchbehälter angeschlossen ist, und eine Reinigungsvorrichtung zum Reinigen des Milchansaugschlauches und der Vorrichtung zum Aufschäumen und/oder Erwärmen von Milch durch ein von einem Spülfluidausgang der Getränkebereitungsmaschine abgebbares Spülfluid.

Unter "Reinigungsvorrichtung" wird in diesem Zusammenhang eine Vorrichtung verstanden, welche mehrere Elemente umfasst, welche auch zueinander entfernt angeordnet sein können. Unter "Spülfluid" wird in diesem Zusammenhang ein jegliches Fluid verstanden, welches zum Fortspülen von Milch, Reinigen von Milchresten und/oder Desinfizieren geeignet ist.

Gemäss der Erfindung ist die Milch aus dem Milchbehälter durch einen in der Vorrichtung zum Aufschäumen und/oder Erwärmen von Milch (3) erzeugbaren Unterdruck in die Vorrichtung zum Aufschäumen und/oder Erwärmen von Milch (3) ansaugbar, und die Reinigungsvorrichtung umfasst ein Umschaltventil, welches in eine Betriebsstellung umschaltbar ist, bei welcher eine Milchverbindung zwischen dem Milchbehälter und der Vorrichtung zum Aufschäumen und/oder Erwärmen von Milch über den Milchansaugschlauch freigeschaltet ist, und in eine Spülstellung umschaltbar ist, bei welcher eine erste Spülfluidverbindung zwischen dem Spülfluidausgang der Getränkebereitungsmaschine und der Vorrichtung zum Aufschäumen und/oder Erwärmen von Milch über einen Spülschlauch, das in die Spülstellung umgeschaltete Umschaltventil und den Milchansaugschlauch freigeschaltet ist.

Die erfindungsgemässe Getränkebereitungsmaschine kann beispielsweise mit einer Dampfleitung zum Zuführen von Dampf in die Vorrichtung zum Aufschäumen und/oder Erwärmen von Milchausgestattet sein, wobei die Vorrichtung zum Aufschäumen und/oder Erwärmen von Milch derart ausgebildet ist, dass durch Zuführen von Dampf in die Vorrichtung zum Aufschäumen und/oder Erwärmen von Milch der jeweilige Unterdruck in der Vorrichtung zum Aufschäumen und/oder Erwärmen von Milch erzeugbar ist.

Die erfindungsgemässe Getränkebereitungsmaschine ermöglicht es, dass dem Benutzer eine Handhabung des mit Milch verschmutzten Milchansaugschlauches erspart bleibt. Es wird hierbei lediglich einmalig ein weiterer Schlauch bzw. Spülschlauch parallel zum Milchansaugschlauch zwischen der Getränkebereitungsmaschine und dem Milchbehälter platziert. Dieser Spülschlauch wird seitens der Getränkebereitungsmaschine mit einem Spülfluidausgang verbunden. Der Spülfluidausgang kann hierbei eine jegliche Quelle eines Spülfluides sein, beispielsweise Wasser, Heisswasser oder Dampf. Der Spülschlauch wird seitens des Milchbehälters mit einem Eingang des Umschaltventils verbunden. Das Umschaltventil enthält einen Ausgang, an welchem der herkömmliche Milchansaugschlauch angeschlossen ist, wobei das weitere Ende des milchansaugschlauches herkömmlicherweise mit der Vorrichtung zum Aufschäumen und/oder Erwärmen von Milch verbunden ist. Das Umschaltventil enthält einen weiteren Eingang, welchem die Milch über beispielsweise einen weiteren Schlauch bzw. einer Milchansauglanze aus dem Milchbehälter zugeführt werden kann.

Das Umschaltventil kann in zwei Stellungen umgeschaltet werden, nämlich eine Betriebsstellung und eine Spülstellung, wobei das jeweilige Umschalten vom Anwender manuell oder gesteuert über ein elektrisches Stellglied vorgenommen werden kann.

Im Falle der Betriebsstellung des Umschaltventils ist ein Bezug von Milch und/oder Milchschaum über die Vorrichtung zum Aufschäumen und/oder Erwärmen von Milch möglich (Stellung "Milchbezug"). Bei dieser Stellung ist dementsprechend eine Milchverbindung zwischen dem Milchbehälter und der Vorrichtung zum Aufschäumen und/oder Erwärmen von Milch über den Milchansaugschlauch freigeschaltet. Gleichzeitig ist der Zugang zum Spülschlauch gesperrt. Wünscht der Benutzer einen Milchbezug, so wird die Milch in der Vorrichtung zum Aufschäumen und/oder Erwärmen von Milch mittels Dampf nach dem Venturi-Prinzip angesaugt und in dieser durch den Dampf erhitzt bzw. durch Mischung mit Luft aufgeschäumt.

Bei der Umschaltung in die Spülstellung schaltet der Benutzer das Umschaltventil derart um (manuell oder gesteuert über ein elektrisches Stellglied), dass eine Fluidverbindung, beginnend von dem Spülfluidausgang zu dem Spülschlauch und über das Umschaltventil zu dem Milchansaugschlauch und dann zu der Vorrichtung zum Aufschäumen und/oder Erwärmen von Milch freigeschaltet ist. Hingegen ist bei dieser Spülstellung die Verbindung des Milchansaugschlauchs zum Milchbehälter durch das Umschaltventil gesperrt, d.h. die Milchverbindung zwischen dem Milchbehälter und der Vorrichtung zum Aufschäumen und/oder Erwärmen von Milch ist durch das Umschaltventil unterbrochen. Ein dem Umschalten des Umschaltventils in die Spülstellung nachfolgender Bezug des Spülfluides über den Spülfluidausgang führt somit dazu, dass das Spülfluid durch den Spülschlauch und durch den Milchansaugschlauch fliesst, wodurch Letzterer dann von Milch und Milchresten gereinigt wird. Die daraus resultierende Fluidlösung, bestehend aus dem Spülfluid und den Milchresten, wird dann an die Vorrichtung zum Aufschäumen und/oder Erwärmen von Milch geführt, wodurch diese ebenfalls gereinigt wird. Schliesslich wird die Fluidlösung an den daran anschliessenden Milchauslauf abgeführt, wodurch dieser ebenfalls gereinigt wird. Schliesslich kann die Fluidlösung in einem unterhalb des Milchauslaufs platzierten Gefäss aufgenommen werden und später dem Abwasser zugeführt werden. Somit müssen keine milchverschmutzten Schläuche berührt oder umgesteckt werden, welches für den Benutzer angenehm ist und eine Erleichterung bedeutet. Ausserdem wird eine mögliche Kontamination der Milch durch Keime verhindert.

Bei der erfindungsgemässen Getränkebereitungsmaschine ist der Spülfluidausgang eine Dampfleitung der Getränkebereitungsmaschine, welche derart ausgelegt ist, der Vorrichtung zum Aufschäumen und/oder Erwärmen von Milch Dampf oder ein Heisswasser-/Dampfgemisch abzugeben. Hierzu kann die Dampfleitung, welche herkömmlicherweise stromaufwärts der Vorrichtung zum Aufschäumen und/oder Erwärmen von Milch angeordnet ist, lediglich angezapft werden, wobei an diese Anzapfung der Dampfleitung dann der Spülschlauch angekoppelt wird. Diese Ausführungsform erweist sich als sehr einfach und günstig, da keinerlei weitere Einrichtungen vorgesehen werden müssen, welche das Spülfluid abgeben. Auch müssen keine weiteren Einrichtungen vorgesehen werden, welche das Spülfluid befördern, wie beispielsweise Fluidpumpen. Auch erweist sich das von der Dampfleitung abgegebene Spülfluid, in diesem Fall das Heisswasser-/Dampfgemisch, als sehr vorteilhaft zum Reinigen des Milchansaugschlauches und der Vorrichtung zum Aufschäumen und/oder Erwärmen von Milch. Dieses Spülfluid ist sehr vorteilhaft, um eventuell verkrustete Milchreste, welche an der Innenwand des Milchansaugschlauches anhaften, aufzulösen und abzuführen.

Weiterhin ist, wenn das Umschaltventil in die Spülstellung umgeschaltet ist, eine direkte zweite Spülfluidverbindung zwischen der Dampfleitung und der Vorrichtung zum Aufschäumen und/oder Erwärmen von Milch freigeschaltet. Schon nach einem einmaligen Bezug von Milch ist neben dem Milchansaugschlauch ebenfalls die Vorrichtung zum Aufschäumen und/oder Erwärmen von Milch durch Milch bzw. Milchreste stark verunreinigt. Zwar mündet der Milchansaugschlauch in die Vorrichtung zum Aufschäumen und/oder Erwärmen von Milch, sodass das Spülfluid im Spülbetrieb auch in diese geleitet bzw. gespült wird, allerdings ist eine gründlichere Reinigung aller Innenbereiche dieser Vorrichtung gewünscht. Bedingt durch den Aufbau dieser Vorrichtung liegen nämlich im Inneren schwer zugängliche Bereiche bzw. Vertiefungen vor, an denen sich die Milchreste hartnäckig anhaften können. Um diese Vorrichtung gründlich und gezielt zu reinigen, ist in dieser Ausführungsform vorgeschlagen, dass ein Anteil des Spülfluides - ohne den Umweg über den Spülschlauch, das Umschaltventil und den Milchansaugschlauch - direkt in die Vorrichtung zum Aufschäumen und/oder Erwärmen von Milch geleitet wird.

In einer bevorzugten Ausführungsform ist durch die erste Spülfluidverbindung ein erster (Volumen-) Anteil des von dem Spülfluidausgang abgegebenen Spülfluids durchleitbar und ist durch die zweite Spülfluidverbindung ein zweiter (Volumen-) Anteil des von dem Spülfluidausgang abgegebenen Spülfluids durchleitbar, wobei das jeweilige Volumen des ersten Anteils und das jeweilige Volumen des zweiten Anteils zueinander in einem vorgegebenen Verhältnis stehen. Somit wird ein bestimmter Anteil des Spülfluides durch den Spülschlauch, den Milchansaugschlauch und in die Vorrichtung zum Aufschäumen und/oder Erwärmen von Milch geleitet und wird ein weiterer Anteil des Spülfluides direkt in die Vorrichtung zum Aufschäumen und/oder Erwärmen von Milch geleitet.

Vorzugsweise liegt das vorgegebene Verhältnis im Bereich von 1/3 bis 3 liegt. Um ein solches Verhältnis oder ähnliche Verhältnisse zwischen den Volumina des ersten und des zweiten Anteils einzustellen, können die strömungstechnischen Eigenschaften der zwei unterschiedlichen Fluidpfade dem Verhältnis entsprechend eingestellt bzw. entworfen werden. Dies wäre beispielsweise möglich durch eine entsprechende Wahl der Dimensionen des Spülschlauchs und des Milchansaugschlauchs (Durchmesser, Länge) und/oder eine entsprechende Wahl der Dimensionen der zwei Anzapfungen der Dampfleitung. Beispielsweise wäre es ebenfalls möglich, dass im Verlaufe der Dampfleitung zu den zwei Anzapfungen hin ein entsprechendes Ventil eingebaut wird, welches im Spülbetrieb einen ersten Anteil des Spülfluides an den Spülschlauch abgibt und einen zweiten Anteil des Spülfluides an die Vorrichtung zum Aufschäumen und/oder Erwärmen von Milch abgibt, wobei die Volumina der beiden Anteile zueinander in einem vorgegebenen Verhältnis stehen.

Bei der Getränkebereitungsmaschine kann die Reinigungsvorrichtung vorzugsweise derart ausgelegt sein, dass im Anschluss an die Durchleitung des Spülfluids jeweils Dampf durch den Spülschlauch, das Umschaltventil und den Milchansaugschlauch durchleitbar ist, wobei der Dampf das Spülfluid herausbefördert. Dies hat den Vorteil, dass die Schläuche, insbesondere der Milchansaugschlauch, komplett von dem Spülfluid entleert werden. Ein Verbleib eines Restvolumens des Spülfluids nach dem Spülbetrieb in dem Milchansaugschlauch hätte nämlich den Nachteil, dass dieses Restvolumen bei einem nachfolgenden Milchbezug mit in das Getränk hineinbefördert wird. Dies würde insbesondere nach einer längeren Betriebspause der Getränkebereitungsmaschine zu einer nachteiligen geschmacklichen Veränderung des Getränks führen. Das Spülfluid ist in diesem Falle schon lange abgestanden und könnte, je nach Beschaffenheit des Materials des Milchansaugschlauches, in dem Spülfluid lösbare Bestandteile des Milchansaugschlauches aufnehmen. Wenn dieses Spülfluid dann in das Getränk fliesst, würde dies zu einer merkbaren Geschmacksveränderung des Getränks führen. Ausserdem könnte es zu einem unkontrollierten Nachlaufen (Nachtropfen) des Spülfluides kommen. Indem jedoch der Dampfbezug durchgeleitet wird, wird das restliche Spülfluid, welches sich noch im Spülschlauch, dem Umschaltventil und dem Milchansaugschlauch befindet, komplett heraus befördert. Somit wird ein Bezug von abgestandenem Spülfluid im nächsten Milchbezug verhindert. Ebenfalls kann ein unkontrolliertes Nachlaufen von Spülfluid unterbunden werden.

In einer bevorzugten Ausführungsform ist im Verlauf des Spülschlauchs ein Reinigungsbehälter zwischengesetzt, welcher ein Reinigungsmittel beinhaltet. In einer beispielhaften Anordnung kann das Spülfluid von dem Spülfluidausgang aus durch den Spülschlauch in den Reinigungsbehälter fliessen. Dort vermischt sich das Spülfluid mit dem Reinigungsmittel, und das Gemisch, bestehend aus Spülfluid und Reinigungsmittel, fliesst weiter zu dem Umschaltventil. Durch das Umschaltventil wird das Gemisch in den Milchansaugschlauch umgeleitet und fliesst über diesen dann in die Vorrichtung zum Aufschäumen und/oder Erwärmen von Milch und von dort aus über den Milchauslass in ein darunter befindliches Gefäss.

Vorzugsweise ist der Reinigungsbehälter am Milchbehälter angeordnet. Hierbei kann der Reinigungsbehälter in einem Milchbehälterdeckel des Milchbehälters untergebracht werden.

In einer weiteren Ausführungsform ist das Reinigungsmittel eine Reinigungsflüssigkeit oder eine Reinigungstablette. Hierbei vermengt sich das Spülfluid zu einem gewissen Anteil mit der Reinigungsflüssigkeit oder löst die Reinigungstablette langsam auf und vermengt sich mit den aufgelösten Anteilen. Das Gemisch fliesst dann über das Umschaltventil durch den Milchansaugschlauch. Das mit dem Reinigungsmittel versetzte Spülfluid hat eine hervorragende Eigenschaft zum Reinigen von insbesondere dem Milchansaugschlauch und der Vorrichtung zum Aufschäumen und/oder Erwärmen von Milch und eignet sich hierzu besser als die ledigliche Verwendung von Wasser oder einem Heisswasser-/Dampfgemisch. Somit wird eine bleibende Geschmacksneutralität und darüber hinaus eine längere Lebensdauer der Getränkebereitungsmaschine ermöglicht.

Vorzugsweise ist das Umschaltventil über ein elektrisches Stellglied ansteuerbar. Somit kann der Spülbetrieb zum Reinigen der Getränkebereitungsmaschine von Milch und Milchresten, insbesondere die Reinigung des Milchansaugschlauches, auf Knopfdruck durch den Benutzer angesteuert werden, ohne dass das Umschaltventil hierzu mechanisch umgeschaltet werden muss. Das elektrische Umschalten könnte über eine Steuerung der Getränkebereitungsmaschine bei der Bedienung einer Benutzerschnittstelle geschehen. Beispielsweise könnte dieser Spülbetrieb auch automatisch erfolgen, sobald die Getränkebereitungsmaschine ein- und/oder ausgeschaltet wird, ähnlich einem herkömmlichen Spülbetrieb zum Spülen der Brühgruppe und Fluidleitungen der Getränkebereitungsmaschine.

Der vorstehende Vorteil der vorliegenden Erfindung wird auch durch ein Verfahren zum Reinigen einer Getrönkebereitungsmaschine nach Anspruch 9 erzielt, das sich durch seinen einfachen und effizienten Ablauf auszeichnet und das konstruktiv besonders einfach und kostengünstig realisierbar ist.

Das Verfahren enthält die Schritte: a) Umschalten des Umschaltventils in eine Spülstellung, bei welcher eine erste Spülfluidverbindung zwischen dem Spülfluidausgang der Getränkebereitungsmaschine und der Vorrichtung zum Aufschäumen und/oder Erwärmen von Milch über den Spülschlauch, das in die Spülstellung umgeschaltete Umschaltventil und den Milchansaugschlauch freigeschaltet wird, b) Abgeben von Spülfluid von dem Spülfluidausgang Durchleiten mindestens eines ersten Anteils des jeweils abgegebenen Spülfluids von dem Spülfluidausgang an die Vorrichtung zum Aufschäumen und/oder Erwärmen von Milch über den Spülschlauch, das in die Spülstellung umgeschaltete Umschaltventil und den Milchansaugschlauch, und c) Beenden der Durchleitung des Spülfluids.

Das erfindungsgemässe Verfahren ermöglicht es, jene Elemente der Getränkebereitungsmaschine, welche mit Milch in Kontakt treten, zu reinigen. Hierzu wird das Umschaltventil, welches an dem Milchbehälter angeordnet sein kann, in eine Spülstellung umgeschaltet. Anschliessend wird das Spülfluid von dem Spülfluidausgang ausgehend über den Spülschlauch, das Umschaltventil und den Milchansaugschlauch durchgeleitet.

Der Schritt b) des Verfahrens enthält ebenfalls den Schritt eines Durchleitens eines zweiten Anteils des Spülfluids von dem Spülfluidausgang direkt an die Vorrichtung zum Aufschäumen und/oder Erwärmen von Milch. Somit kann diese Vorrichtung durch diesen zweiten Anteil des Spülfluids schnell und gründlich gereinigt werden.

Vorzugsweise wird das Verhältnis zwischen den Volumina des ersten und des zweiten Anteils eingestellt. In einer bevorzugten Ausführungsform wird das Verhältnis auf einen Wert eingestellt, welcher im Bereich von 1/3 bis 3 liegt.

Bevorzugt enthält das Verfahren nach dem Schritt c) zusätzlich die Schritte: d) Durchleiten von Dampf von dem Spülfluidausgang an die Vorrichtung zum Aufschäumen und/oder Erwärmen von Milch über den Spülschlauch, das in die Spülstellung umgeschaltete Umschaltventil und den Milchansaugschlauch, welcher Dampf einen Spülfluidrest aus dem Milchansaugschlauch und/oder der Vorrichtung zum Aufschäumen und/oder Erwärmen von Milch herausbefördert, und e) Beenden der Durchleitung des Dampfes. Somit wird ein in dem System verbleibendes Spülfluid insbesondere aus der Vorrichtung zum Aufschäumen und/oder Erwärmen von Milch und dem Milchansaugschlauch herausbefördert.

Weitere Einzelheiten der Erfindung und insbesondere beispielhafte Ausführungsformen der erfindungsgemässen Getränkebereitungsmaschine und des Verfahrens werden im Folgenden anhand der beigefügten Zeichnungen erläutert. Es zeigen:
- Fig. 1A: eine Getränkebereitungsmaschine gemäss der Erfin- dung, mit einem Umschaltventil, wobei ein Spül- schlauch an eine Dampfleitung und das Umschaltven- til angeschlossen ist und das Umschaltventil in eine Betriebsstellung gebracht ist;
- Fig. 1B: da Umschaltventil gemäss Fig. 1A, wobei das Um- schaltventil in eine Spülstellung umgeschaltet ist;
- Fig. 2: die Getränkebereitungsmaschine gemäss Figur 1A, wobei der Spülschlauch an eine Heisswasserleitung angeschlossen ist; diese Ausführungsform fällt nicht unter dem Schutzumfang der Ansprüche.
- Fig. 3: die Getränkebereitungsmaschine gemäss Figur 1A, wobei ein Reinigungsbehälter in einem Milchbehäl- ter angeordnet ist; und
- Fig. 4: eine Schnittansicht von einer Vorrichtung zum Auf- schäumen und/oder Erwärmen von Milch und von daran angeschlossenen Elementen.

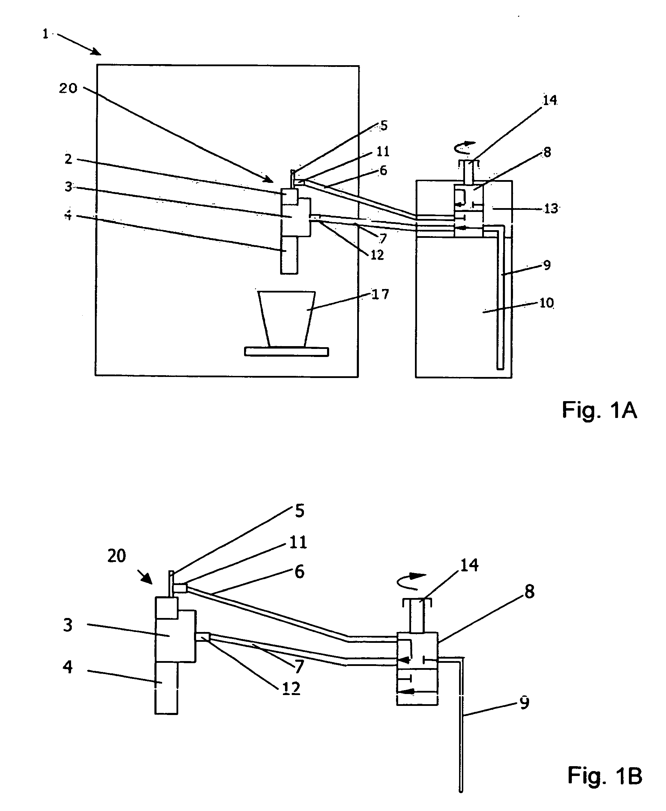

Figur 1A zeigt eine Frontansicht einer Getränkebereitungsmaschine 1, welche zur Bereitung einer Vielzahl verschiedener Getränke, hier insbesondere Kaffeegetränke, ausgelegt ist. Diese Getränkebereitungsmaschine 1 enthält eine Milch- und/oder Milchschaum-Abgabeeinrichtung 20. Die Getränkebereitungsmaschine 1 kann ferner einen Kaffeeauslaufkopf (nicht gezeigt) zur Abgabe von Kaffeespezialitäten enthalten. Alternativ können die Milch- und/oder Milchschaum-Abgabeeinrichtung 20 und der Kaffeeauslaufkopf auch zu einer einstückigen Einheit zusammengefasst sein (nicht gezeigt) und zu diesem Zweck insbesondere zur Bereitung von Kaffee, erwärmter Milch und geschäumter Milch und zur Bereitung von Kaffeespezialitäten, welche gegebenenfalls Milch und/oder Milchschaum enthalten, ausgelegt sein.

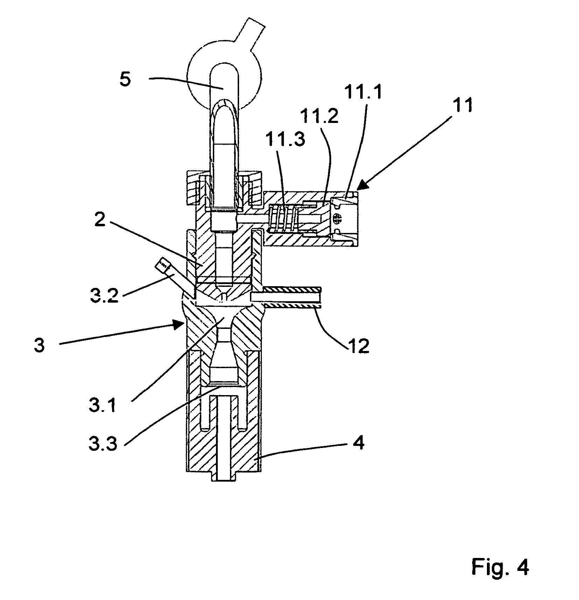

Die Milch- und/oder Milchschaum-Abgabeeinrichtung 20 an der Vorderseite der Getränkebereitungsmaschine 1 enthält eine Vorrichtung zum Aufschäumen und/oder Erwärmen von Milch 3. Stromabwärts dieser Vorrichtung 3 ist ein Milchauslauf 4 angeordnet, unter welchem ein Gefäss 17 platziert werden kann. Stromaufwärts der Vorrichtung zum Aufschäumen und/oder Erwärmen von Milch 3 ist eine Dampfleitung 5 angeordnet, welche die Vorrichtung zum Aufschäumen und/oder Erwärmen von Milch 3 mit einem Heisswasser-/Dampfgemisch versorgt. Zwischen der Dampfleitung 5 und der Vorrichtung zum Aufschäumen und/oder Erwärmen von Milch 3 ist eine Dampfdüse 2 zwischengesetzt. In die Vorrichtung zum Aufschäumen und/oder Erwärmen von Milch 3 mündet ebenfalls eine Milchansaugschlauch-Andockung 12, an welche ein Milchansaugschlauch 7 (im vorliegenden Beispiel ein Ende des Milchansaugschlauchs 7) angeschlossen ist, über welchen Milch aus einem Milchbehälter 10 zugeführt wird. Durch den Bezug eines Heisswasser-/Dampfgemisches aus dem Dampfausgang 5 wird die Milch aus dem Milchbehälter 10 nach dem Venturi-Prinzip in die Vorrichtung zum Aufschäumen und/oder Erwärmen von Milch 3 angesaugt, was im Folgenden insbesondere im Zusammenhang mit Fig. 4 noch näher erläutert wird.

Erfindungsgemäss mündet das andere Ende des Milchansaugschlauches 7 in einem Ausgang eines Umschaltventils 8, welches oberhalb des Milchbehälters 10 angebracht ist. Hierbei ist das Umschaltventil 8 innerhalb eines Milchbehälterdeckels 13 angeordnet und kann über einen über die Oberseite des Milchbehälterdeckels 13 ragenden Umschalthebel 14 in zwei Stellungen, beispielsweise mittels einer Drehbewegung (durch einen Pfeil angezeigt), manuell umgestellt werden. An einem Eingang des Umschaltventils 8 ist eine Milchansauglanze 9 angeschlossen, deren anderes Ende tief in den Milchvorrat des Milchbehälters 10 hineinragt. An einem weiteren Eingang des Umschaltventils 8 ist ein Spülschlauch 6 angeschlossen, dessen anderes Ende an einer Spülschlauch-Andockung 11 angeschlossen ist. Die Spülschlauch-Andockung 11 steht wiederum in Fluidverbindung mit dem Dampfausgang 5.

Ist das Umschaltventil 8 (wie in Fig. 1A dargestellt) in eine Betriebsstellung, welche einen Milchbezug ermöglicht, geschaltet und wird an dem Dampfausgang 5 Dampf oder ein Heisswasser-/Dampfgemisch bezogen, so wird die Milch gemäss dem Venturi-Prinzip aus dem Milchbehälter 10 über die Milchansauglanze 9 angesaugt. Die Milch wird dann über das Umschaltventil 8 an den Milchansaugschlauch 7 umgeleitet. Von dem Milchansaugschlauch 7 aus gelangt die Milch dann über die Milchansaugschlauch-Andockung 12 in die Vorrichtung zum Aufschäumen und/oder Erwärmen von Milch 3 und wird dort durch den Dampf bzw. das Heisswasser-/Dampfgemisch erwärmt und eventuell (falls die Milch mit Luft vermischt wird) aufgeschäumt. Das Milchprodukt wird anschliessend in den Milchauslauf 4 gefördert und gelangt von dort aus in das Gefäss 17. Damit bei diesem Vorgang kein Dampf bzw. kein Heisswasser-/Dampfgemisch über die Spülschlauch-Andockung 11, den Spülschlauch 6 und somit in den Milchbehälter 10 eintreten kann, ist der Eingang des Spülschlauches 6 zum Umschaltventil 8 verschlossen.

Um das System zu spülen, wird das Umschaltventil 8 mittels manueller Betätigung des Umschalthebels 14, beispielsweise eine Drehbewegung, in die Spülstellung umgeschaltet (Fig. 1B). Diese Umstellung kann auch über ein elektrisches Stellglied (nicht gezeigt) erfolgen, welches elektrisch ansteuerbar ist. Anschliessend wird an der Getränkebereitungsmaschine 1 manuell oder automatisch ein Heisswasser-/Dampfgemisch durch den Dampfausgang 5 geleitet, welches dann durch den Spülschlauch 6 zum Umschaltventil 8 fliesst. Dieses ist nun derart umgeschaltet, dass es dieses Gemisch an den Milchansaugschlauch 7 weiterleitet bzw. durchleitet. Das Gemisch spült dann die Milch und Milchreste, welche sich in dem Milchansaugschlauch 7 befinden, über die Milchansaugschlauch-Andockung 12 in die Vorrichtung zum Aufschäumen und/oder Erwärmen von Milch 3. Das Gemisch strömt schliesslich durch diese Vorrichtung 3 zum Milchauslauf 4 und kann dann in dem darunter befindlichen Gefäss 17 aufgenommen werden (Fig. 1A). Das Heisswasser-/Dampfgemisch kann nicht nur Milch und Milchreste aus dem Milchansaugschlauch 7 spülen, sondern ebenfalls Milchverkrustungen an der Innenwand des Milchansaugschlauches 7 auflösen und dann ebenfalls fortspülen.

Analog werden auch Milchreste und Milchverkrustungen, welche sich innerhalb der Vorrichtung zum Aufschäumen und/oder Erwärmen von Milch 3 befinden, aus dieser herausgespült. Es ist zu erwähnen, dass, wenn sich das Umschaltventil 8 in dieser Spülstellung befindet, der Zugang zur Milchansauglanze 9 verschlossen ist, sodass kein Heisswasser-/Dampfgemisch über die Milchansauglanze 9 in den Milchbehälter 10 gelangt (Fig. 1B).

Bei diesem Spülbetrieb wird auch ein gewisser Anteil des Heisswasser-/Dampfgemisches direkt von dem Dampfausgang 5 in die Vorrichtung zum Aufschäumen und/oder Erwärmen von Milch 3 geleitet, da herkömmlicherweise eine Verbindung zwischen dem Dampfausgang 5 und der Vorrichtung zum Aufschäumen und/oder Erwärmen von Milch 3 besteht. Somit wird eine direkte und gründliche Reinigung der Vorrichtung zum Aufschäumen und/oder Erwärmen von Milch 3 vorgenommen. Es kann beispielsweise vorgesehen sein, dass jeweils ein Anteil von 1/3 des Volumens des von dem Dampfausgang 5 abgegebenen Heisswasser-/Dampfgemisches direkt in die Vorrichtung zum Aufschäumen und/oder Erwärmen von Milch 3 geleitet wird und ein Anteil von 2/3 des Volumens des von dem Dampfausgang 5 abgegebenen Heisswasser-/Dampfgemisches über den Spülschlauch 6, das Umschaltventil 8 und den Milchansaugschlauch 7 in die Vorrichtung zum Aufschäumen und/oder Erwärmen von Milch 3 geleitet wird. Somit werden alle Bereiche der Getränkebereitungsmaschine 1, welche mit Milch in Kontakt treten, einfach und effektiv gereinigt. Zudem braucht der Benutzer hierzu keine umständlichen Schritte vorzunehmen und braucht keine mit Milch beschmutzten Schläuche zu berühren.

Direkt im Anschluss an die Spülung durch das Heisswasser-/Dampfgemisch kann manuell oder automatisch ein Bezug von Dampf aus dem Dampfausgang 5 ausgelöst werden. Dadurch wird Restwasser, welches sich noch in dem Spülschlauch 6, dem Umschaltventil 8 und dem Milchansaugschlauch 7 befindet, herausbefördert. Dies hat den Vorteil, dass ein unkontrolliertes Nachlaufen von Restwasser verhindert wird. Zudem wird beim nächsten Milchbezug kein abgestandenes Restwasser bezogen. Im Anschluss an den Spülvorgang und Dampfbezug kann das Umschaltventil 8 wieder manuell oder elektrisch angetrieben in die Betriebsstellung umgeschaltet werden.

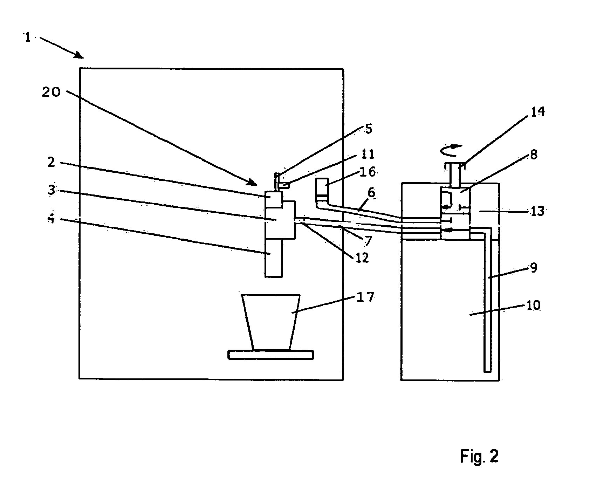

Figur 2 zeigt die in Figur 1A dargestellte Getränkebereitungsmaschine 1 in einer weiteren Ausführungsform. Hierbei ist ein Ende des Spülschlauches 6 über die Spülschlauch-Andockung 11 an eine Heisswasserleitung 16 angeschlossen, welche bei einer Kaffeemaschine in der Regel vorhanden ist. Der Spülschlauch 6 kann auch an einer jeglichen anderen Vorrichtung zur Versorgung mit einem zum Reinigen geeigneten Medium angeschlossen sein. Das Funktionsprinzip ist ähnlich jenem wie bei der Beschreibung zu den Figuren 1A und 1B angegeben. In dieser Ausführungsform kann zusätzlich vorgesehen sein, dass ein gewisser Anteil eines Heisswasser-/Dampfgemisches aus dem Dampfausgang 5 direkt in die Vorrichtung zum Aufschäumen und/oder Erwärmen von Milch 3 eingeleitet wird, um diese gezielt und gründlich zu reinigen.

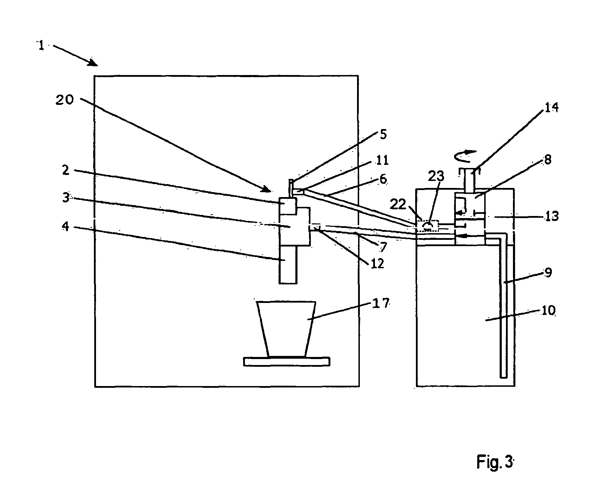

Figur 3 zeigt eine weitere Ausführungsform der Getränkebereitungsmaschine 1 gemäss der Erfindung. In dieser Ausführungsform ist in dem Milchbehälterdeckel 13, zusätzlich zu dem Umschaltventil 8, ein Reinigungsbehälter 15 angeordnet. Dieser enthält ein Reinigungsmittel 16, welches entweder eine Reinigungsflüssigkeit oder eine Reinigungstablette sein kann. Hierbei ist das Ende des Spülschlauches 6 seitens des Milchbehälters 10 an dem Reinigungsbehälter 22 angeschlossen. Zwischen dem Reinigungsbehälter 22 und dem Eingang zum Umschaltventil 8 kann eine Fluidleitung zwischengesetzt sein. Alternativ können der Reinigungsbehälter 22 und das Umschaltventil 8 miteinander fluiddicht verbunden sein. In dieser Ausführungsform ist das andere Ende des Spülschlauches 6 seitens der Getränkebereitungsmaschine 1 über die Spülschlauch-Andockung 11 mit dem Dampfausgang 5 verbunden, wie in Figur 1A gezeigt. Alternativ kann dieses Ende über die Spülschlauch-Andockung 11 mit einer der Heisswasserleitung, beispielsweise entsprechend der Heisswasserleitung 16 gemäss Figur 2, verbunden sein. In dieser Ausführungsform ist die Art und Weise eines Milchbezuges gleich jener wie in Figur 1A beschrieben.

Im Spülbetrieb fliesst das Heisswasser-/Dampfgemisch hingegen über den Spülschlauch 6 zunächst in den Reinigungsbehälter 22 und dann in den Eingang des Umschaltventils 8. Dabei nimmt das Heisswasser-/Dampfgemisch einen bestimmten Anteil des Reinigungsmittels 23 auf. Dieses Gemisch, welches sich sehr gut zum Reinigen, insbesondere von Milchresten, eignet, wird dann über das Umschaltventil 8 an den Milchansaugschlauch 7 weitergeleitet und spült diesen. Anschliessend fliesst das Gemisch über die Milchansaugschlauch-Andockung 12 in die Vorrichtung zum Aufschäumen und/oder Erwärmen von Milch 3 und schlussendlich in den Milchauslauf 4. Somit können der Milchansaugschlauch 7 und die Vorrichtung zum Aufschäumen und/oder Erwärmen von Milch 3 besonders gründlich und hygienisch gereinigt werden.

Wie bereits oben in Verbindung mit der Beschreibung der Figur 1B dargelegt, kann auch hier im Anschluss an die Spülung automatisch oder manuell kurz ein Dampfbezug über den Dampfausgang 5 ausgelöst werden. Dieser befördert die mit dem Reinigungsmittel versetzte Restflüssigkeit aus dem Spülschlauch 6, dem Umschaltventil 8, dem Milchansaugschlauch 7 und der Vorrichtung zum Aufschäumen und/oder Erwärmen von Milch 3 heraus. Somit wird einerseits ein unkontrolliertes Nachlaufen des mit dem Reinigungsmittel versetzten Spülwassers als auch ein Bezug dessen im nächsten Milchbezug verhindert. Durch diesen Dampfbezug wird vorteilhafterweise die Geschmacksneutralität des Getränkes beim nächsten Milchbezug bewahrt. Im Anschluss an den Spülvorgang kann das Umschaltventil 8 wieder manuell oder elektrisch angetrieben in die Milchbezugsstellung (entsprechend Fig. 1A) umgeschaltet werden.

Figur 4 zeigt die Vorrichtung zum Aufschäumen und/oder Erwärmen von Milch 3 mit dem daran stromabwärts anschliessenden Milchauslauf 4, der Milchansaugschlauch-Andockung 12, der Spülschlauch-Andockung 11 und dem Dampfausgang 5 in einer Schnittansicht. Die Vorrichtung zum Aufschäumen und/oder Erwärmen von Milch 3 ist mit dem Dampfausgang 5 über eine Rohrleitung verbunden, welche die Vorrichtung 3 mit Dampf oder einem Heisswasser-/Dampfgemisch aus dem Dampfausgang 5 versorgt, wobei die genannte Rohrleitung in die Dampfdüse 2 mündet. Wie Fig. 4 zeigt, kann von dem Dampfausgang 5 abgegebener Dampf bzw. ein von dem Dampfausgang 5 abgegebenes Heisswasser-/Dampfgemisch aus der Dampfdüse 2 in eine Unterdruckkammer 3.1 strömen und dabei in der Unterdruckammer 3.1 - wie diese Bezeichnung andeutet - einen Unterdruck erzeugen, welcher es ermöglicht, ein oder mehrere Fluide (Milch bzw. Luft) in die Unterdruckkammer 3.1 über entsprechende Zugänge für die jeweiligen Fluide anzusaugen (Venturiprinzip). Um eine Zufuhr von Milch zu ermöglichen, ist seitlich an der Vorrichtung zum Aufschäumen und/oder Erwärmen von Milch 3 die Milchansaugschlauch-Andockung 12 derart angeschlossen, dass über die Milchansaugschlauch-Andockung 12 eine Fluidverbindung zur Unterdruckkammer 3.1 gewährleistet ist. Ein Ende der Milchansaugschlauch-Andockung 12 ist dazu ausgebildet, um ein Ende des Milchansaugschlauches 7 (nicht in _Fig. 4 gezeigt) fluiddicht, schnell und einfach, beispielsweise mittels eines abgedichteten Schnappverschlusses, aufzunehmen. Wie Fig. 4 weiterhin zeigt, ist die Spülschlauch-Andockung 11 an der Dampfdüse 2 derart angeschlossen, dass die Spülschlauch-Andockung 11 mit dem Dampfausgang 5 in Fluidverbindung steht, sodass gegebenenfalls von dem Dampfausgang 5 abgegebener Dampf bzw. ein von dem Dampfausgang 5 abgegebenes Heisswasser-/Dampfgemisch an einen gemäss Fig. 1A bzw. 1B an die Spülschlauch-Andockung 11 angeschlossenen Spülschlauch 6 abgegeben werden kann. Die Spülschlauch-Andockung 11 umfasst eine Kupplung 11.1 für den Spülschlauch 6, welche dazu dient, ein an die Spülschlauch-Andockung 11 angedocktes Ende des Spülschlauchs 6 in einer vorgegebenen Stellung zu fixieren, welche eine gegen einen Austritt von Dampf bzw. Heisswasser dichte Verbindung zwischen der Spülschlauch-Andockung 11 und dem Spülschlauch 6 gewährleistet. Wie Fig. 4 weiterhin andeutet, ist in die Spülschlauch-Andockung 11 ein Ventil, umfassend einen Ventilkolben 11.2 und eine Feder 11.3, integriert. Der Ventilkolben 11.2 und die Feder 11.3 sind einer durchgehenden Bohrung der Spülschlauch-Andockung 11 derart angeordnet, dass - falls kein Spülschlauch 6 an die Spülschlauch-Andockung 11 angedockt ist - die Feder 11.3 den Ventilkolben 11.2 in einer ersten Stellung hält, in welcher der Ventilkolben 11.2 einen Durchfluss von Dampf und/oder Heisswasser durch die Spülschlauch-Andockung 11 verhindert. Falls allerdings ein Spülschlauch 6 an die Spülschlauch-Andockung 11 angedockt und mit der Kupplung 11.1 verbunden wird, dann wird der Spülschlauch 6 zwangsläufig mit dem Ventilkolben 11.2 derart in Kontakt gebracht, dass der Ventilkolben 11.2 gegen eine Rückstellkraft der Feder 11.3 bewegt und in eine zweite Stellung gebracht wird, in welcher der Ventilkolben 11.2 einen Fluss von Dampf und/oder Heisswasser durch die Spülschlauch-Andockung 11 in den Spülschlauch 6 ermöglicht.

Bei einem "Milchbezug" fliesst Dampf oder ein Heisswasser-/Dampfgemisch aus dem Dampfausgang 5 in die Vorrichtung zum Aufschäumen und/oder Erwärmen von Milch 3, wodurch die Milch - wie bereits erläutert - über die Milchansaugschlauch-Andockung 12 in die Unterdruckkammer 3.1 der Vorrichtung zum Aufschäumen und/oder Erwärmen von Milch 3 angesaugt wird und durch die Vermischung mit dem Dampf Heisswasser-/Dampfgemisch erhitzt wird. Wie Fig. 4 weiterhin andeutet, umfasst die Vorrichtung zum Aufschäumen und/oder Erwärmen von Milch 3 eine Öffnung 3.2, über welche die Unterdruckkammer 3.1 mit der Umgebung kommuniziert, sodass eine Zufuhr von Luft in die Unterdruckkammer 3.1 über die Öffnung 3.2 möglich ist. Somit kann Luft in die Vorrichtung 3 über die Öffnung 3.2 in die Unterdruckkammer 3.1 eingelassen bzw. angesaugt werden, welche Luft die jeweils in die Unterdruckkammer 3.1 angesaugte Milch in Abhängigkeit von einer Benutzerangabe aufschäumt. Diese erwärmte Milch oder aufgeschäumte erwärmte Milch wird in einer mit der Unterdruckkammer 3.1 kommunizierenden Emulsionskammer 3.3 gesammelt und von dort über den Milchauslauf 4 an ein unterhalb des Milchauslaufs 4 platziertes Gefäss (nicht gezeigt) abgegeben. Bei dem Milchbezug ist das Umschaltventil 8, welches in der Figur 4 nicht dargestellt ist, gemäss Fig. 1A derart eingestellt, dass der Spülschlauch 6 (in Fig. 4 nicht gezeigt) für Dampf bzw. ein Heisswasser-/Dampfgemisches durch das Umschaltventil 8 gesperrt ist. Somit fliesst kein Dampf bzw. Heisswasser-/Dampfgemisch aus der Spülschlauch-Andockung 11 in den Milchbehälter 10 (Fig. 1A).

Im Spülbetrieb wird das Umschaltventil 8 umgeschaltet, wodurch das Ende des Spülschlauches 6 seitens des Milchbehälters 10 geöffnet wird und eine Fluidverbindung mit dem Milchansaugschlauch 7 hergestellt wird (entsprechend Fig. 1B). Bei dieser Spülstellung wird der Zugang der in die Milch ragenden Milchansauglanze 9 (siehe Fig. 1B) gesperrt. Ein von dem Dampfausgang 5 abgegebenes Heisswasser-/Dampfgemisch spült die Milch, welche sich in dem Milchansaugschlauch 7 befindet, sowie darin befindliche Milchreste und/oder Milchverkrustungen aus diesem heraus. Dieses Gemisch fliesst über die Milchansaugschlauch-Andockung 12 in die Vorrichtung zum Aufschäumen und/oder Erwärmen von Milch 3. Von dort aus gelangt dieses Gemisch über den Milchauslauf 4 an ein darunter platziertes Gefäss und kann aufgesammelt werden. Zusätzlich zu diesem oben beschriebenen Fluidpfad besteht ein weiterer Fluidpfad von dem Dampfausgang 5 direkt in die Vorrichtung zum Aufschäumen und/oder Erwärmen von Milch 3. Somit fliesst ein erster Anteil des Heisswasser-/Dampfgemisches in dieser Reihenfolge über die Spülschlauch-Andockung 11, den Spülschlauch 6, das Umschaltventil 8, den Milchansaugschlauch 7 und die Milchansaugschlauch-Andockung 12 in die Vorrichtung zum Aufschäumen und/oder Erwärmen von Milch 3. Zusätzlich fliesst ein zweiter Anteil des Heisswasser-/Dampfgemisches direkt über den Dampfausgang 5 in die Vorrichtung zum Aufschäumen und/oder Erwärmen von Milch 3.

Beispielsweise können die jeweiligen Volumina des ersten und des zweiten Anteils des Heisswasser-/Dampfgemisches zueinander in einem Verhältnis stehen, welches einen Wert im Bereich von 1/3 bis 3 annimmt. Dieses Verhältnis der jeweiligen Volumina kann unter Berücksichtigung der strömungstechnischen Eigenschaften der Bauteile der Vorrichtung zum Aufschäumen und/oder Erwärmen von Milch 3 eingestellt werden, wobei beispielsweise die Dimensionen der einzelnen Elemente geeigneterweise gewählt werden, Zusätzlich oder alternativ kann in dem Bereich des Dampfausganges 5 zwischen der Spülschlauch-Andockung 11 und der Milchansaugschlauch-Andockung 12 ein Ventil (nicht gezeigt) vorgesehen werden, welches derart ausgebildet ist, dass ein vorgegebenes Verhältnis zwischen dem jeweiligen Volumen des ersten Anteils und dem Volumen des zweiten Anteils des Heisswasser-/Dampfgemisches eingestellt werden kann.

Somit werden sämtliche Bereiche des Systems, welche mit Milch in Kontakt treten, schnell und wirksam gereinigt. Zudem ist die Handhabung sehr einfach und es müssen keine milchverschmutzten Schläuche berührt oder umgesteckt werden.

Durch einen im Anschluss an den Spülbetrieb eingeleiteten Dampfbezug können insbesondere der Spülschlauch 6 und der Milchansaugschlauch 7 bzw. das gesamte Fluidsystem komplett entleert werden. Somit gelangt nach einem späteren Milchbezug kein abgestandenes Restwasser in das Getränk. Zusätzlich wird ein unkontrolliertes Nachlaufen von Restwasser verhindert.

Die im Zusammenhang mit der Erfindung beschriebenen "Schläuche", insbesondere der Spülschlauch 6 und der Milchansaugschlauch 7, können im Rahmen dieser Erfindung jeweils durch eine beliebige Leitung ersetzt werden, welche für eine Realisierung einer Fluidverbindung für die jeweils erwähnten Fluide (Milch bzw. Spülfluid) geeignet ist.

## Patentansprüche

1. Getränkebereitungsmaschine (1), welche umfasst;
einen Dampfausgang (5) zur Abgabe von Dampf oder eines Heisswasser-/Dampfgemischs,
eine Vorrichtung zum Aufschäumen und/oder Erwärmen von Milch (3), welche Vorrichtung über einen Milchansaugschlauch (7) an einen Milchbehälter (10) angeschlossen ist, und
eine Reinigungsvorrichtung zum Reinigen des Milchansaugschlauches (7) und der Vorrichtung zum Aufschäumen und/oder Erwärmen von Milch (3),
wobei die Vorrichtung zum Aufschäumen und/oder Erwärmen von Milch (3)
eine Kammer (3.1),
eine in die Kammer (3.1) mündende Milchansaugschlauch-Andockung (12) zum Anschliessen des Milchansaugschlauchs (7),
eine Dampfdüse (2) zum Einleiten von Dampf oder eines Heisswaser-/Dampfgemischs in die Kammer (3.1) und eine Öffnung (3.2) zur Zufuhr von Luft in die Kammer (3.1) umfasst,
wobei an Milchansaugschlauch-Andockung (12) ein von dem Milchbehälter (10) abgewandtes Ende des Milchansaugschlauchs (7) angeschlossen ist und
wobei die Dampfdüse (2) mit dem Dampfausgang (5) verbunden ist, sodass Dampf oder ein Heisswasser-/Dampfgemisch aus dem Dampfausgang (5) über die Dampfdüse (2) in die Kammer (3.1) einleitbar und dabei in der Kammer (3.1) ein Unterdruck erzeugbar ist,
**dadurch gekennzeichnet, dass**
die Reinigungsvorrichtung ein Umschaltventil (8) und einen Spülschlauch (6) enthält,
ein von der Milchansaugschlauch-Andockung (12) abgewandtes Ende des Milchansaugschlauchs (7) über das Umschaltventil (8) mit dem Milchbehälter (10) verbunden ist und
das Umschaltventil (8) über den Spülschlauch (6) mit dem Dampfausgang (5) verbunden ist,
wobei das Umschaltventil (8) in eine Betriebsstellung umschaltbar ist, bei welcher eine Milchverbindung zwischen dem Milchbehälter (10) und der Vorrichtung zum Aufschäumen und/oder Erwärmen von Milch (3) über den Milchansaugschlauch (7) freigeschaltet ist, und
wobei, wenn das Umschaltventil (8) in die Betriebsstellung geschaltet ist, Dampf oder ein Heisswasser-/Dampfgemisch aus dem Dampfausgang (5) über die Dampfdüse (2) in die Kammer (3.1) einleitbar und dadurch in der Kammer (3.1) ein Unterdruck erzeugbar und Milch aus dem Milchbehälter (10) in die Kammer (3.1) ansaugbar ist,
wobei das Umschaltventil (8) in eine Spülstellung umschaltbar ist, bei welcher eine erste Spülfluidverbindung zwischen dem Dampfausgang (5) und der Kammer (3.1) über den Spülachlauch (6), das in die Spülstellung umgeschaltete Umschaltventil (8) und den Milchansaugschlauch (7) freigeschaltet ist,
wobei, wenn das Umschaltventil (8) in eine Spülstellung geschaltet ist, eine zweite Spülfluidverbindung zwischen dem Dampfausgang (5) und der Kammer (3.1) über die Dampfdüse (2) freigeschaltet ist und
aus dem Dampfausgang (5) ein Spülfluid in Form eines Heiswasser-/Dampfgemischs abgebbar und ein erster Anteil dieses Spülfluids über die erste Spülfluidverbindung und ein zweiter Anteil des Spülfluids über die zweite Spülfluidverbindung in die Kammer (3.1) einleitbar ist.

2. Getränkebereitungsmaschine (1) nach Anspruch 1, wobei die jeweiligen Volumina des ersten Anteils und des zweiten Anteils zueinander in einem vorgegebenen Verhältnis stehen.

3. Getränkebereitungsmaschine (1) nach Anspruch 2, bei welcher das vorgegebene Verhältnis im Bereich von 1/3 bis 3 liegt.

4. Getränkebereitungsmaschine (1) nach einem der vorhergehenden Ansprüche, bei welcher die Reinigungsvorrichtung derart ausgelegt ist, dass, wenn das Umschaltventil (8) in die Spülstellung geschaltet ist, im Anschluss an die Durchleitung des Spülfluids ein Dampfbezug realisierbar ist, bei welchem Dampf aus dem Dampfausgang (5) abgebbar und durch den Spülschlauch (6), das Umschaltventil (8) und den Milchansaugschlauch (7) durchleitbar ist.

5. Getränkebereitungsmaschine (1) nach einem der vorhergehenden Ansprüche, bei welcher in der ersten Spülfluidverbindung zwischen dem Dampfausgang (5) und dem Umschaltventil (8) ein Reinigungsbehälter (22) zwischengesetzt ist, welcher ein Reinigungsmittel (23) beinhaltet.

6. Getränkebereitungsmaschine (1) nach Anspruch 5, bei welcher der Reinigungsbehälter (22) am Milchbehälter (10) angeordnet ist.

7. Getränkebereitungsmaschine (1) nach einem der Ansprüche 5 oder 6, bei welcher das Reinigungsmittel (23) eine Reinigungsflüssigkeit oder eine Reinigungstablette ist.

8. Getränkebereitungsmaschine (1) nach einem der vorhergehenden Ansprüche, bei welcher das Umschaltventil (8) über ein elektrisches Stellglied ansteuerbar ist.

9. Verfahren zum Reinigen einer Getränkebereitungsmaschine (1) nach einem der Ansprüche 1 bis 8, welches die Schritte enthält:
a) Umschalten des Umschaltventils (8) in eine Spülstellung, bei welcher eine erste Spülfluidverbindung zwischen dem Dampfausgang (5) der Getränkebereitungsmaschine (1) und der Kammer (3.1) der Vorrichtung zum Aufschäumen und/oder Erwärmen von Milch (3) über den Spülschlauch (6), das in die Spülstellung umgeschaltete Umschaltventil (8) und den Milchansaugschlauch (7) freigeschaltet wird,
b) Abgeben von Spülfluid in Form eines Heisswasser-/Dampfgemischs aus dem Dampfausgang (5) und Durchleiten mindestens eines ersten Anteils des jeweils abgegebenen Spülfluids in die Kammer (3.1) der Vorrichtung zum Aufschäumen und/oder Erwärmen von Milch (3) über den Spülschlauch (6), das in die Spülstellung umgeschaltete Umschaltventil (8) und den Milchansaugschlauch (7), und
Durchleiten eines zweiten Anteils des jeweils abgegebenen Spülfluids von dem Dampfausgang (5) über die Dampfdüse (2) in die Kammer (3.1),
c) Beenden der Durchleitung des Spülfluids.

10. Verfahren nach Anspruch 9, bei welchem das Verhältnis zwischen dem jeweiligen Volumen des ersten Anteils und dem jeweiligen Volumen des zweiten Anteils eingestellt wird.

11. Verfahren nach Anspruch 10, bei welchem das Verhältnis auf einen Wert eingestellt wird, welcher im Bereich von 1/3 bis 3 liegt .

12. Verfahren nach einem der Ansprüche 9 bis 11, welches nach dem Schritt c) die Schritte enthält:
d) Durchleiten von Dampf von dem Dampfausgang (5) an die Vorrichtung zum Aufschäumen und/oder Erwärmen von Milch (3) über den Spülschlauch (6), das in die Spülstellung umgeschaltete Umschaltventil (8) und den Milchansaugschlauch (7), welcher Dampf einen Spülfluidrest aus dem Milchansaugschlauch (7) und/oder der Vorrichtung zum Aufschäumen und/oder Erwärmen von Milch (3) herausbefördert, und
e) Beenden der Durchleitung des Dampfes.

## Claims

1. A beverage preparation machine (1) which comprises:
a steam line (5) for dispensing steam or a hot water/steam mixture,
an apparatus for frothing and/or heating milk (3), which apparatus is connected via a milk suction hose (7) to a milk container (10), and
a cleaning apparatus for cleaning the milk suction hose (7) and the apparatus for frothing and/or heating milk (3),
the apparatus for frothing and/or heating milk (3) comprising,
a chamber (3.1),
a milk suction hose docking (12) opening into the chamber (3.1) for connecting the milk suction hose (7),
a steam nozzle (2) for introducing steam or a hot water/steam mixture into the chamber (3.1) and
an opening (3.2) for supplying air into the chamber (3.1),
one end of the milk suction hose (7) remote from the milk container (10) being connected to the milk suction hose docking (12) and
the steam nozzle (2) being connected to the steam line (5), so that steam or a hot water/steam mixture may be introduced into the chamber (3.1) from the steam line (5) via the steam nozzle (2) and thus a vacuum may be generated in the chamber (3.1),
**characterized in that**
the cleaning apparatus contains a switching valve (8) and a flushing hose (6),
one end of the milk suction hose (7) remote from the milk suction hose docking (12) is connected to the milk container (10) via the switching valve (8) and
the switching valve (8) is connected to the steam line (5) via the flushing hose (6),
the switching valve (8) being able to be switched into an operating position in which a milk connection is enabled between the milk container (10) and the apparatus for frothing and/or heating milk (3) via the milk suction hose (7), and
when the switching valve (8) is switched into the operating position, steam or a hot water/steam mixture being able to be introduced into the chamber (3.1) from the steam line (5) via the steam nozzle (2) and thereby a vacuum being able to be generated in the chamber (3.1) and milk being able to be sucked out of the milk container (10) into the chamber (3.1),
the switching valve (8) being able to be switched into a flushing position in which a first flushing fluid connection is enabled between the steam line (5) and the chamber (3.1) via the flushing hose (6), the switching valve (8) switched into the flushing position and the milk suction hose (7),
when the switching valve (8) is switched into a flushing position, a second flushing fluid connection being enabled between the steam line (5) and the chamber (3.1) via the steam nozzle (2) and
a flushing fluid in the form of a hot water/steam mixture being able to be dispensed from the steam line (5) and a first fraction of said flushing fluid being able to be introduced via the first flushing fluid connection and a second fraction of the flushing fluid being able to be introduced via the second flushing fluid connection into the chamber (3.1).

2. The beverage preparation machine (1) as claimed in claim 1, the respective volumes of the first fraction and the second fraction being in a predetermined ratio to one another.

3. The beverage preparation machine (1) as claimed in claim 2, in which the predetermined ratio lies in the range of 1/3 to 3.

4. The beverage preparation machine (1) as claimed in one of the preceding claims, in which the cleaning apparatus is designed in such a manner that when the switching valve (8) is switched into the flushing position, following the passage of the flushing fluid, a steam withdrawal can be achieved in which steam can be dispensed out of the steam line (5) and passed through the flushing hose (6), the switching valve (8) and the milk suction hose (7).

5. The beverage preparation machine (1) as claimed in one of the preceding claims, in which a cleaning container (22) containing a cleaning agent (23) is interposed in the first flushing fluid connection between the steam line (5) and the switching valve (8).

6. The beverage preparation machine (1) as claimed in claim 5, in which the cleaning container (22) is disposed on the milk container (10).

7. The beverage preparation machine (1) as claimed in one of claims 5 or 6, in which the cleaning agent (23) is a cleaning fluid or a cleaning tablet.

8. The beverage preparation machine (1) as claimed in one of the preceding claims, in which the switching valve (8) can be actuated by means of an electric actuator.

9. A method for cleaning a beverage preparation machine (1) as claimed in one of claims 1 to 8, which contains the steps:
a) switching the switching valve (8) into a flushing position in which a first flushing fluid connection is enabled between the steam line (5) of the beverage preparation machine (1) and the chamber (3.1) of the apparatus for frothing and/or heating milk (3) via the flushing hose (6), the switching valve (8) switched into the flushing position and the milk suction hose (7),
b) dispensing flushing fluid in the form of a hot water/steam mixture from the steam line (5) and passing at least one first fraction of the respectively dispensed flushing fluid into the chamber (3.1) of the apparatus for frothing and/or heating milk (3) via the flushing hose (6), the switching valve (8) switched into the flushing position and the milk suction hose (7), and
passing a second fraction of the respectively dispensed flushing fluid from the steam line (5) via the steam nozzle (2) into the chamber (3.1),
c) ending the passage of the flushing fluid.

10. The method as claimed in claim 9, in which the ratio between the respective volume of the first fraction and the respective volume of the second fraction is set.

11. The method as claimed in claim 10 in which the ratio is set to a value which lies in the range of 1/3 to 3.

12. The method as claimed in one of claims 9 to 11, which after step c) includes the steps:
d) passing steam from the steam line (5) to the apparatus for frothing and/or heating milk (3) via the flushing hose (6), the switching valve (8) switched into the flushing position and the milk suction hose (7), which steam conveys flushing fluid residue from the milk suction hose (7) and/or the apparatus for frothing and/or heating milk (3), and
e) ending the passage of steam.

## Revendications

1. Machine de préparation de boisson (1), qui comporte :
une sortie de vapeur (5) pour émette de la vapeur ou un mélange d'eau chaude et de vapeur,
un dispositif servant à faire mousser et/ou chauffer du lait (3), lequel dispositif est raccordé par un tuyau d'aspiration de lait (7) à un réservoir de lait (10), et
un dispositif de nettoyage pour nettoyer le tuyau d'aspiration de lait (7) et le dispositif servant à faire mousser et/ou chauffer du lait (3),
le dispositif servant à faire mousser et/ou chauffer du lait (3) comprenant
une chambre (3.1),
un raccord de tuyau d'aspiration de lait (12) débouchant dans la chambre (3.1) pour le raccordement du tuyau d'aspiration de lait (7),
une buse à vapeur (2) pour introduire de la vapeur ou un mélange d'eau chaude et de vapeur dans la chambre (3.1) et
un orifice (3.2) pour faire rentrer de l'air dans la chambre (3.1),
une extrémité détournée du réservoir de lait (10) du tuyau d'aspiration de lait (7) étant raccordée au raccord de tuyau d'aspiration de lait (12) et la buse à vapeur (2) étant reliée à la sortie de vapeur (5), de manière à ce que de la vapeur ou un mélange d'eau chaude et de vapeur venant de la sortie de vapeur (5) puisse être amené via la buse à vapeur (2) dans la chambre (3.1) et qu'une dépression puisse alors être créée dans la chambre (3.1),
**caractérisée en ce que**
le dispositif de nettoyage comprend une soupape d'inversion (8) et un tuyau de lavage (6),
une extrémité détournée de la fixation du réservoir de lait (12) du tuyau d'aspiration de lait (7) est raccordée au réservoir de lait (10) via la soupape d'inversion (8) et que
la soupape d'inversion (8) est reliée via le tuyau de lavage (6) à la sortie de vapeur (5),
la soupape d'inversion (8) pouvant être commutée à une position de fonctionnement dans laquelle une liaison de lait entre le réservoir de lait (10) et le dispositif servant à faire mousser et/ou chauffer le lait (3) via le tuyau d'aspiration de lait (7) est établie, et
sachant que, lorsque la soupape d'inversion (8) est passée en position de fonctionnement, de la vapeur ou un mélange d'eau chaude et de vapeur venant de la sortie de vapeur (5) peut être amené via la buse à vapeur (2) dans la chambre (3.1) et qu'une dépression peut ainsi être créée dans la chambre (3.1) et que du lait peut être aspiré du réservoir de lait (10) dans la chambre (3.1),
la soupape d'inversion (8) pouvant être commutée à une position de lavage dans laquelle une première liaison de fluide de nettoyage est établie entre la sortie de vapeur (5) et la chambre (3.1) via le tuyau de lavage (6), la soupape d'inversion (8) commutée en position de lavage et le tuyau d'aspiration de lait (7),
sachant que, lorsque la soupape d'inversion (8) est passée en position de lavage, une seconde liaison de fluide est établie entre la sortie de vapeur (5) et la chambre (3.1) via la buse à vapeur (2) et
qu'un fluide de lavage sous forme d'un mélange d'eau chaude et de vapeur peut être émis par la sortie de vapeur (5) et qu'une première partie de ce fluide de lavage peut être conduite via la première liaison de fluide de lavage et une seconde partie de ce fluide de lavage via la seconde liaison de fluide de lavage dans la chambre (3.1).

2. Machine de préparation de boisson (1) selon la revendication 1, les volumes respectifs de la première partie et de la seconde partie présentant un ratio préconisé entre eux.

3. Machine de préparation de boisson (1) selon la revendication 2, dans laquelle le ratio préconisé est de l'ordre de 1/3 à 3.

4. Machine de préparation de boisson (1) selon une des revendications précédentes, dans laquelle le dispositif de nettoyage est conçu de manière à ce que, lorsque la soupape d'inversion (8) est passée en position de lavage, après le passage du fluide de lavage, on peut réaliser une enduction de vapeur lors de laquelle de la vapeur peut être émise par la sortie de vapeur (5) et conduite dans le tuyau de lavage (6), la soupape d'inversion (8) et le tuyau d'aspiration de lait (7).

5. Machine de préparation de boisson (1) selon une des revendications précédentes, dans laquelle, dans la première liaison de fluide de lavage entre la sortie de vapeur (5) et la soupape d'inversion (8), est interposé un réservoir de nettoyage (22) qui contient un produit nettoyant (23).

6. Machine de préparation de boisson (1) selon la revendication 5, dans laquelle le réservoir de nettoyage (22) est disposé au niveau du réservoir de lait (10).

7. Machine de préparation de boisson (1) selon une des revendications 5 ou 6, dans laquelle le produit nettoyant (23) est un liquide nettoyant ou un comprimé nettoyant.

8. Machine de préparation de boisson (1) selon une des revendications précédentes, dans laquelle la soupape d'inversion (8) peut être commandée par un élément de réglage électrique.

9. Procédé de nettoyage d'une machine de préparation de boisson (1) selon une des revendications 1 à 8, comprenant les étapes suivantes :
a) commutation de la soupape d'inversion (8) dans une position de lavage, dans laquelle une première liaison de fluide de lavage est établie entre la sortie de vapeur (5) de la machine de préparation de boisson (1) et la chambre (3.1) du dispositif servant à faire mousser et/ou chauffer le lait (3) via le tuyau de lavage (6), la soupape d'inversion (8) commutée en position de lavage et le tuyau d'aspiration de lait (7),
b) émission de fluide de lavage sous forme d'un mélange d'eau chaude et de vapeur par la sortie de vapeur (5) et passage d'au moins une première partie du fluide de lavage respectivement émis dans la chambre (3.1) du dispositif servant à faire mousser et/ou chauffer le lait (3) via le tuyau de lavage (6), la soupape d'inversion (8) commutée en position de lavage et le tuyau d'aspiration de lait (7) et
passage d'une seconde partie du fluide de lavage respectivement émis par la sortie de vapeur (5) via la buse à vapeur (2) dans la chambre (3.1),
c) fin du passage du fluide de lavage.

10. Procédé selon la revendication 9, dans lequel le ratio entre le volume respectif de la première partie et le volume respectif de la seconde partie est fixé.

11. Procédé selon la revendication 10, dans lequel le ratio est fixé à une valeur qui est de l'ordre de 1/3 à 3.

12. Procédé selon une des revendications 9 à 11, qui comprend après l'étape c) les étapes suivantes :
d) passage de vapeur venant de la sortie de vapeur (5) vers le dispositif servant à faire mousser et/ou chauffer du lait (3) via le tuyau de lavage (6), la soupape d'inversion (8) commutée en position de lavage et le tuyau d'aspiration de lait (7), laquelle vapeur évacue un résidu de fluide de lavage hors du tuyau d'aspiration de lait (7) et/ou du dispositif servant à faire mousser et/ou chauffer du lait (3), et
e) fin du passage de la vapeur.
